(19) **Europäisches Patentamt**

**European Patent Office**

**Office européen des brevets**

(11) **EP 1 530 107 A2**

(12) **EUROPEAN PATENT APPLICATION**

(43) Date of publication:
**11.05.2005 Bulletin 2005/19**

(51) Int Cl.⁷: **G05B 19/19**, G05B 19/401, B25J 9/16

(21) Application number: **04025938.4**

(22) Date of filing: **02.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **06.11.2003 JP 2003377273**

(71) Applicant: **FANUC LTD**
**Minamitsuru-gun, Yamanashi 401-0597 (JP)**

(72) Inventors:
• **Watanabe, Atsushi**
**Suginami-ku Tokyo 168-0072 (JP)**

• **Takizawa, Katsutoshi**
**Tokyo 157-0067 (JP)**
• **Akiyama, Kazuhiko**
**Rm. 12-506 FANUC Manshonharimomi**
**Minamitsuru-gun Yamanashi 401-0511 (JP)**

(74) Representative: **Schmidt, Steffen J., Dipl.-Ing.**
**Wuesthoff & Wuesthoff,**
**Patent- und Rechtsanwälte,**
**Schweigerstrasse 2**
**81541 München (DE)**

(54) **Device for correcting positional data of robot**

(57) To simply correct the positional data in the teaching program for the robot at a stable precision. The working tool (such as a spot welding gun 13 or others) is mounted to an arm of the robot 10 and imaging means 14 is detachably attached to the arm by a magnet 17 or others so that the optical axis coincides with the working direction (the opening/closing direction of the gun 13). When the positional data correcting program starts, the points P1 to P3 on the jig 1 or the workpiece 2 are im-aged at a plurality of image positions D1, D2 and D3, and the position of the respective point is detected. Based on the detected result, the correction is made on the positional data in the teaching program, corresponding to the deviation (in comparison with the off-line data or positional data prior to the transfer of the system) of position and posture of the jig 1 (or the workpiece 2). The tool may be a laser beam machining nozzle, an arc welding torch or a sealing gun.

Fig. 2

EP 1 530 107 A2

**Description**

TECHNICAL FIELD

The present invention relates to a device for correcting positional data of a robot for carrying out a working operation while mounting, on an arm thereof, a tool for delivering energy or a working substance to a workpiece, wherein the data is corrected by using a vision sensor.

BACKGROUND ART

It is common that a working tool is mounted onto a robot arm and the robot is operated based on a program taught thereto so that a working operation, such as spot welding, arc welding or laser-beam machining, is executed on a workpiece fixed to a jig. In a working operation of such a kind, there is case in that a system including the robot or the jig is transferred to another place or that a system whose layout is prepared in an off-line is actually installed at a job site.

In the former case, it is practically difficult to unvaryingly maintain the relative positional relationship between the robot and the jig (including the workpiece located on the jig; also hereinafter) and some deviation is unavoidable between before and after the transfer. In the latter case, there is some deviation in the relative positional relationship between the robot and the jig, between the system whose layout is prepared in an off-line and the system actually installed.

Accordingly, generally speaking, it is necessary to correct positional data in a teaching program (an operation program containing positional data for determining the transfer position of the robot; also hereinafter) used before the transfer or a program taught off-line. This correcting operation may require considerable man-hours if the number of positions to be corrected is large, resulting in a large load on the operator.

In a method for correcting positional data most popularly used in the prior art, three points or more predetermined on a jig or a workpiece fixed on the jig are touched up by a touch-up pin attached to a robot tool while manually operating the robot (jog feeding), and the positional data are corrected based on positions of the robot (positions and postures of a distal end of the tool) during the touch-up.

In the above-mentioned prior art, however, it is difficult to accurately set the tool center point (TCP) corresponding to a distal point of the touch-up pin when the operator is not skillful. Thereby, it is difficult to precisely correct the positional data in the program.

Accordingly, an object of the present invention is to provide a device for simply correcting positional data of a program, with stable precision, without using a touch-up system.

DISCLOSURE OF THE INVENTION.

The present invention solves the above-mentioned problem by adopting a system wherein, instead of a touch-up pin used in the prior art, an imaging means of an optical system is attached to a tool in a posture corresponding to a "working direction" of the tool to detect positions of a plurality of predetermined points and, based on the detected result, the positional data is corrected.

More concretely, the present invention provides a device for correcting positional data of a robot comprising a vision sensor including imaging means and image-processing means for processing an image obtained by the imaging means, and positional data correcting means for correcting positional data of a motion of the robot in correspondence to the deviation from a reference position of a jig or a workpiece obtained by processing the image of a plurality of predetermined points, imaged while using the imaging means, by the image-processing means.

The device for correcting positional data of a robot is provided with attachment means for detachably attaching the imaging means to a tool for delivering energy or working substance to a workpiece, wherein the attachment means attaches the imaging means to the tool so that an optical axis of the imaging means coincides with the working direction of the tool.

In this regard, in this description, the working direction of the tool is defined as follows:

(1) when the tool itself moves to be brought into contact with the workpiece during the working operation while using energy or working substance, the moving direction is defined as a "working direction". For example, if the tool is a spot welding gun, the working direction is the opening/closing direction of the spot welding gun.

(2) During the working operation while using energy or working substance except for the above-mentioned item (1), when the energy or the working substance is projected or injected from the tool, the projecting or injecting direction is defined as a "working direction". Such a direction coincides with the longitudinal direction of the tool in many cases. For example, when the tool is a laser beam machining nozzle, the longitudinal direction of the laser beam machining nozzle is defined as a "working direction". When the tool is an arc welding torch (a welding wire is the working substance), the longitudinal direction of the arc welding torch is defined as a "working direction". Further, if the tool is a sealing gun, the ejecting direction of sealing agent is defined as a "working direction".

The attachment means for detachably attaching the imaging means to the tool is capable of freely attaching or detaching the imaging means, for example, by using a magnetic force, a mechanical fastening means such as screws or a pneumatic fastening means using air pressure such as a sucker. The vision sensor is preferably a three-dimensional vision sensor, but in some cases, may be a two-dimensional vision sensor. The image of the plurality of points by the imaging means is carried out while locating the imaging means at positions suitable for imaging these predetermined points by the motion of the robot based on an image-position moving program teaching to the robot.

According to the present invention, it is possible to simply correct the positional data in the program without using the touch-up system. Also, as the shot of the image for correcting the positional data is carried out by the imaging means attached to the tool so that the optical axis of the imaging means substantially coincides with the working direction of the tool, the posture of the robot for the image is reasonable and the access to the jig or workpiece at a proper distance is smooth, whereby it is possible to correct the positional data with stable precision, even for an unskilled person. Further, if the imaging means is detachably attached to the tool via detachable means such as a magnet, it is possible to detach the imaging means during the working operation so that the imaging means is not exposed to the unfavorable environment.

BRIEF DESCRIPTION OF THE DRAWINGS

Fig. 1 illustrates a total layout of one embodiment of the present invention;
Fig. 2 is an illustration for explaining the calibration of a vision sensor;
Fig. 3 is an illustration for explaining the definition of a coordinate system of a jig;
Fig. 4 is a flow chart for explaining the steps for correcting the positional data in a program teaching a robot;
Fig. 5 is an illustration for explaining the image of a plurality of points carried out in the embodiment of the present invention;
Fig. 6 is an illustration for explaining a case wherein a tool is an arc welding torch;
Fig. 7 is an illustration for explaining a case wherein a tool is a laser beam machining nozzle; and
Fig. 8 is an illustration for explaining a case wherein a tool is a sealing gun.

DETAILED DESCRIPTION OF THE INVENTION

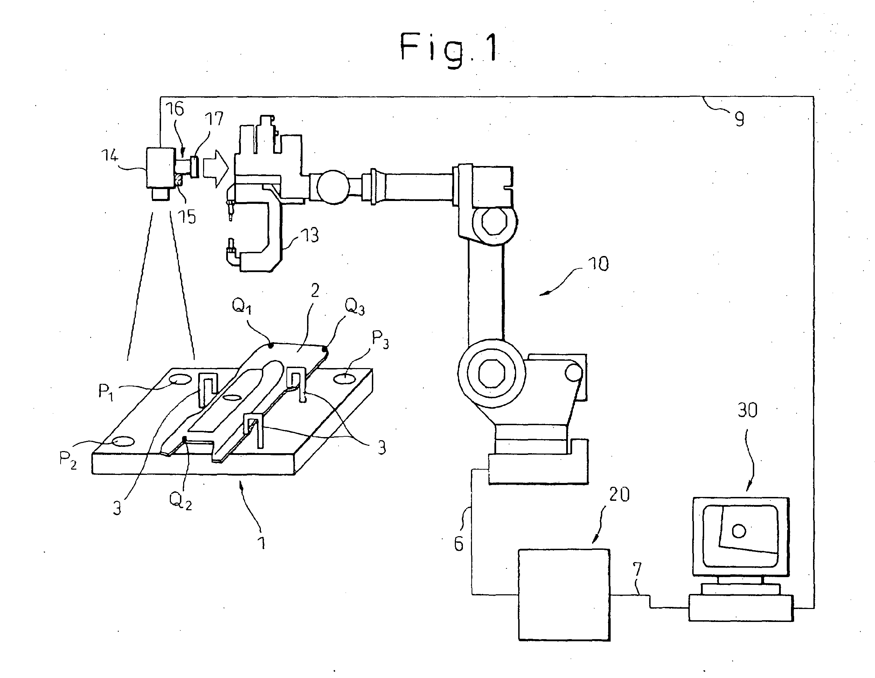

Fig. 1 schematically illustrates a total layout of a system used in one embodiment of the present invention. As shown, reference numeral 10 denotes, for example a vertical type articulated robot (hereinafter merely referred to as a "robot") connected via a cable 6 to a robot control device 20 for controlling the operation of the robot. In the vicinity of a distal end of an arm of the robot 10, a tool 13 and imaging means 14 are attached. The tool 13 is a spot welding gun in this embodiment.

Electric power (voltage or current) necessary for the spot welding is supplied to the spot welding gun 13 in a well-known manner. The spot welding gun 13 has a mechanism necessary for opening/closing a gun tip thereof, and electric power for driving the mechanism is also supplied in a well-known manner. In this regard, the supply lines therefor are not shown in the drawing. An operation program is stored in the robot control device 20 in a well-known manner, defining the content of the transfer control of the robot and the control of a robot gun (the control of welding voltage/welding current) necessary for performing the spot welding.

The imaging means 14 which is for example a CCD camera is connected via a cable 9 to an image processing device 30 and constitutes a vision sensor together with image processing device 30. The vision sensor is a three-dimensional vision sensor in this embodiment, and has a light projector 15 for projecting pattern light (a slit light, a spot light or others) in a well-known manner.

In this regard, when the three-dimensional vision sensor is constituted, known systems may be adopted. For example, two CCD cameras may be used as the imaging means 14 to constitute the three-dimensional vision sensor for detecting a three-dimensional position by a so-called stereo system. Or, as described later, if a height position (a Z-axis coordinate value) of a point to be detected on a jig or a workpiece is known, a two-dimensional vision sensor may be adopted.

In Fig. 1, reference numeral 1 denotes a jig for fixing a workpiece 2 (an object to be spot-welded in this embodiment). While the detailed description of a structure of the jig 1 is omitted here, the workplace 2 is fixed and positioned to a predetermined position on the jig 1 by several fasteners 3 etc. The position and the posture of the jig 1 will be described later.

The imaging means 14 may image the jig 1 (in some cases, image the workpiece 2 as described later) placed at a job site. Image data are input into the image processing device 30 wherein the image processing and the object recognition are carried out by the processing program in the image processing device 30.

The robot control device 20 and the image processing device 30 are connected to each other via a communication interface, for example LAN network, which has a general function of a known robot-image processing device system such as (i) informing a present position of the robot 10 to the image processing device 30, (ii) outputting an imaging command from the robot control device 20 to the image processing device 30 and imaging, (iii) transmitting an aimed operational position of the robot 10 determined on the image processing device 30 side to the robot control device, or (iv) carrying out the processing while synchronizing the image processing device 30 with the robot control device 20.

One of characteristics of the present invention resides in that the imaging means 14 is attached to the tool 13 (the spot welding gun in this embodiment) in a freely detachable manner by using, for example, a magnet 17, and that the attachment posture thereof is specified such that an optical axis of the imaging means (camera) 14 substantially coincides with the working direction of the tool 13 relative to the workpiece. According to this embodiment, the tool 13 is a spot-welding gun and the opening/closing direction of the spot welding gun (the upward/downward direction in Fig. 1) is defined as a "working direction". That is, the optical axis of the imaging means (camera) 14 extends in the upward/downward direction in Fig. 1.

An attachment mechanism 16 used for such an attachment may be simple in structure and not only that using the magnet 17 as shown in this embodiment. It may also be a mechanical mechanism using fastening screws. For example, a plurality of threaded holes are formed on the lateral surface of the tool 13, through which a plurality of screws are used for fixing the imaging means 14. When it is desired to detach the imaging means 14, the screws are released to disengage the fastening. Alternatively, a pneumatic mechanism using a sucker or the like may be usable as the attachment mechanism 16. Since such detachable attachment mechanisms are well-known, an individual illustration and a detailed description thereof will be omitted.

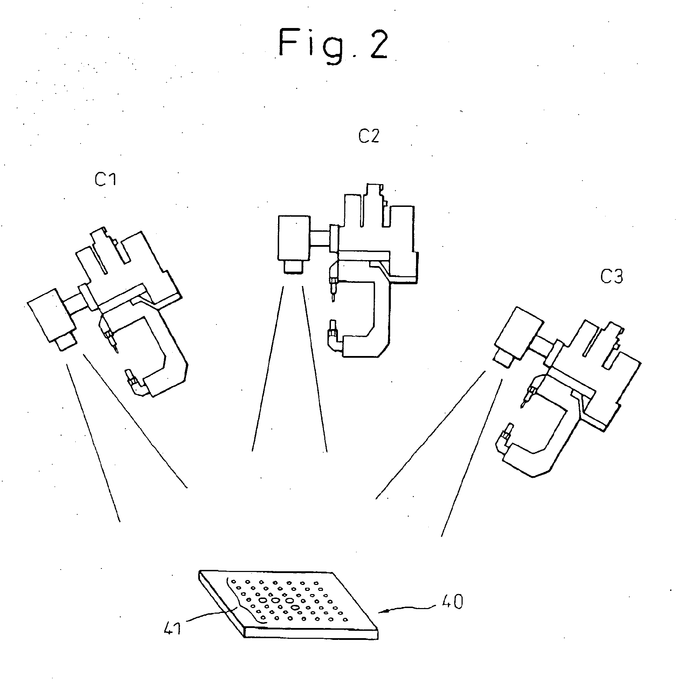

Under the condition wherein the imaging means 14 is attached to the tool 13 in such a manner, calibration of the vision sensor is preliminarily carried out. Generally, the calibration is an operation for obtaining the positional and postural relationship between the imaging means 14 and a face plate (an attachment surface at a distal end of the arm) of the robot 10 to get data of a conversion matrix indicating the relationship between a sensor coordinate system $\Lambda$ for representing data of the vision sensor and a base coordinate system $\Gamma$ of the robot. Since there are various well-known methods for carrying out the calibration, the detailed description thereof will be omitted. For example, as shown in Fig. 2, a calibration jig 40 on which characteristic points 41 etc. are depicted in accordance with a defined shape and arrangement is located at a known position (which position and posture are known on the base coordinate system $\Gamma$). The calibration jig 40 are imaged by the imaging means at least in three directions C1, C2 and C3 so that the defined shape and arrangement are recognized to obtain detection data of the vision sensor.

A parameter necessary for converting sensor data to the base coordinate system data is calculated from the relationship between the detection data and the data of the defined shape and arrangement (known on the base coordinate system $\Gamma$). A position detected by the vision sensor from this calibrating operation is convertible, at any time, to data on the base coordinate system $\Gamma$. In the following description, it is assumed that the calibration has already been completed.

Next, the premised items relating to the position and posture of the jig 1 will be explained. According to this embodiment, the following two cases are assumed.

(Case 1): wherein the expected position and posture of the jig 1 are preliminarily determined in an off-line programming system

In this case, these off-line data of the expected position and posture exist as the position and posture of the jig coordinate system fixed on the jig 1 (the position and posture relative to the base coordinate system of the robot), and are preliminarily stored in a memory of the robot control device 20 or the image processing device 30.

Note that, although the actual position and posture of the jig 1 at a job site (see Fig. 1) may be close to those determined by the off-line data, there is no guarantee that they coincide with each other.

(Case 2): wherein the jig 1 is rearranged when transferring of the total system

In this case, data prior to the transfer exist as the position and posture of the jig coordinate system fixed on the jig 1 (the position and posture relative to the base coordinate system of the robot) in correspondence to the off-line data in case 1, and are stored in a memory of the robot control device 20 or the image processing device 30. Also, in this case, it is thought that the actual position and posture of the jig 1 at a job site after the transfer (see Fig. 1) are, of course, deviated from those prior to the transfer.

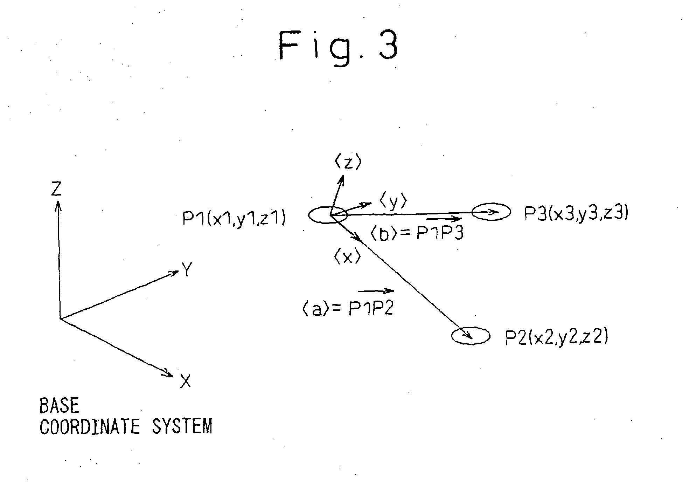

The representation manner of the position and posture of the jig 1 will be explained below with reference to Fig. 3. In either of the above-mentioned cases, the position and posture of the jig 1 are representable by a jig coordinate system $\Sigma$ defined by using a plane formed of specific points P1, P2 and P3 preliminarily selected on the jig 1. As a specific point, a characteristic portion easily recognizable by the vision sensor is selected (such as a corner, a hole center, a projection or a mark). In one example, as shown in Fig. 3, the point P1 represents as an origin of the jig coordinate system $\Sigma$, and a unit vector <a> directed from the point P1 to the point P2 is defined as a unit vector <x> representing the x-axis direction; i.e. <x> = <a>.

Similarly, a unit vector directed from the point P1 to the point P3 is defined as <b> and a vector product <a>x<b> is defined as a unit vector <z> representing the z-axis direction. Further, a vector product <z>x<a> is defined as a unit vector <y> representing the y-axis direction. In this regard, <> is used as a mark representing a vector.

As described above, in Case 1 or Case 2, the off-line data or the jig coordinate system prior to the transfer is represented by $\Sigma$od, and the vectors <x>, <y> and <z> defining this coordinate system are represented by <xod>, <yod> and <zod>, respectively. Also, a matrix representing the position and posture of the jig

coordinate system $\Sigma$od relative to the base coordinate system $\Gamma$ is represented by [$\Sigma$od]. In this embodiment, data of [$\Sigma$od] are stored in a memory of the robot control device 20 or the image processing device 30. Also, data of <aod>, <bod> and <cod> may be stored. In this regard, [] is used as a mark for representing a matrix.

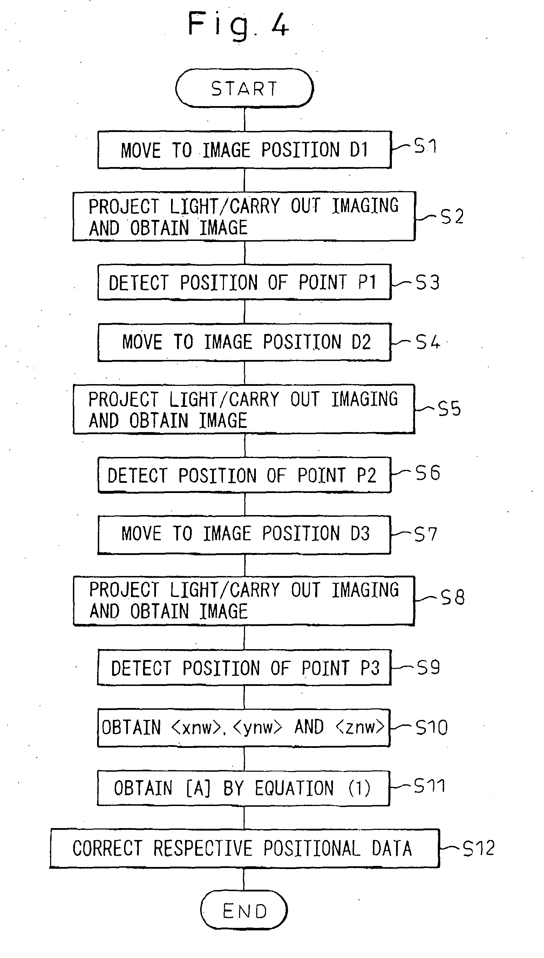

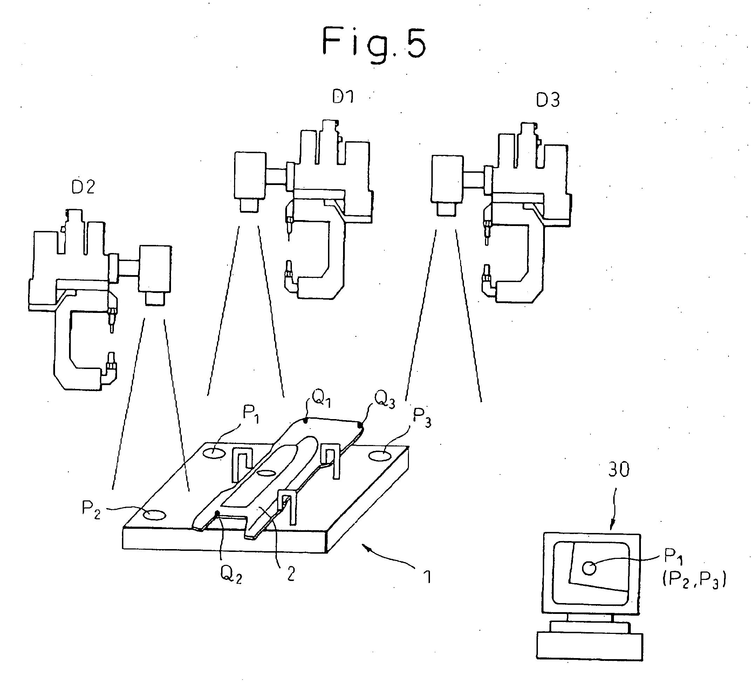

Following the above preparation, a processing sequence for correcting the positional data (that is, data already stored in a predetermined address in the memory of the robot control device 20) in the program teaching to the robot will be described with reference further to Figs. 4 and 5. Steps of the processing sequence are shown in a flow chart of Fig. 4, and a plurality of positions to be imaged are illustrated in Fig. 5. A program defining various steps written in the flow chart of Fig. 4 (hereinafter referred to as a teaching positional data correction program) is preliminarily stored in the robot control device 20 (in some cases, in the image processing device 30), and the processing is commenced by starting the program. The CPU for supervising the processing is, for example, that of the robot control device 20, and the processing is executed with the association of the robot control device 20, the image processing device 30 and the vision sensor (imaging means 14, light projector 15 or others).

Step S1: The tool is transferred to an image position D1 designated by the teaching positional data correction program.

Step S2: Lighting/image is carried out at the image position D1 to obtain an image in which the point P1 on the jig 1 is in the field of view.

Step S3: The image is processed in the image processing device 30 to detect the three-dimensional position of the point P1.

Step S4: The tool is transferred to the image position D2 designated by the teaching positional data correction program.

Step S5: Lighting/image is carried out at the image position D2 to obtain an image in which the point P2 on the jig 1 is in the field of view.

Step S6: The image is processed in the image processing device 30 to detect the three-dimensional position of the point P2.

Step S7: The tool is transferred to the image position D3 designated by the teaching positional data correction program.

Step S8: Lighting/image is carried out at the image position D3 to obtain an image in which the point P3 on the jig 1 is in the field of view.

Step S9: The image is processed in the image processing device 30 to detect the three-dimensional position of the point P3.

Step S10: Vectors <xnw>, <ynm> and <znw> defining the jig coordinate system $\Sigma$nw are obtained based on the three-dimensional positions P1, P2 and P3. In this regard, a suffix nw means new data obtained at a job site. The representation manner of these vectors <xnw>, <ynw> and <znw> is the same as described before with reference to Fig. 3. If the position and posture of the jig 1 at a job site is completely identical to those when the off-line data is made or prior to the transfer, it should be <xnw> = <xod>, <ynw> = <yod> and <znw> = <zod>. Actually, there is some deviation in most cases.

Step 11: A matrix [A] representing the relationship between the positions and postures of the jig coordinate system $\Sigma$od defined by old data <xod>, <yod> and <zod> and those defined by the jig coordinate system $\Sigma$nw defined by new data <xnw>, <ynw> and <znw> is calculated. The matrix [A] is obtained by the following equation (1):

$$[A] = [\Sigma od]^{-1} [\Sigma nw] \qquad (1)$$

Here, [$\Sigma$od] is the matrix representing the position and posture in the jig coordinate system $\Sigma$od relative to the base coordinate system $\Gamma$ as described before. Similarly, [$\Sigma$nw] is the matrix representing the position and posture in the jig coordinate system $\Sigma$nw relative to the base coordinate system $\Gamma$.

Step S12: The positional data in the teaching program are corrected by using the matrix [A]. The correction is carried out in the following manner, for example.

As is well-known, the positional data usually has positional components X, Y and Z and posture components P, W and R of the robot tool coordinate system. The positional data prior to the correction are assumed as (Xod, Yod, Zod, Pod, Wod and Rod). A matrix representing the positional posture of the tool coordinate system corresponding to these positional data on the base coordinate system $\Gamma$ is assumed as [Tod]. The equation for calculating the matrix [Tod] from the positional data (Xod, Yod, Zod, Pod, Wod and Rod) and the reverse operation are well-know, and the detailed description thereof is omitted.

The correction of the positional data is carried out as follows by using the matrix [Tod]:

First, the matrix [Tnw] is calculated by the following equation (2).

$$[Tnw] = [A] [Tod] \qquad (2)$$

The positional data (Xnw, Ynw, Znw, Pnw, Wnw and Rnw) are obtained from the matrix [Tnw] by the reverse operation. When the correction is carried out for renewing the old positional data (Xod, Yod, Zod, Pod, Wod and Rod) to the new positional data (Xnw, Ynw, Znw, Pnw, Wnw and Rnw), the correction corresponding to the deviation of the jig 1 is applied to the positional data in the teaching program. Needless to say, such a correction is preferably carried out at all the teaching points at which the position and posture of the jig 1 have an influence on the working operation.

While the vision sensor was a three-dimensional type in the above-mentioned embodiment, a two-dimensional vision sensor may be used in some cases. For example, if the jig is of a plate shape having a constant height all over the surface, the two-dimensional vision sensor may be used. In this case, the height value may be used as the Z coordinate value (on the base coordinate system $\Gamma$) of the predetermined points P1 to P3, and the same result is obtained as that using the three-dimensional vision sensor.

While the predetermined points to be imaged are selected on the jig surface in the above embodiment, part or all of them may be points Q1, Q2, Q3 or the like selected on the surface of the workpiece 2 in some cases. That is, as the workpiece 2 is to be correctly positioned to the jig 1, it is possible to construct a coordinate system for representing the jig (or workpiece) position by using the points Q1, Q2, Q3 or the like.

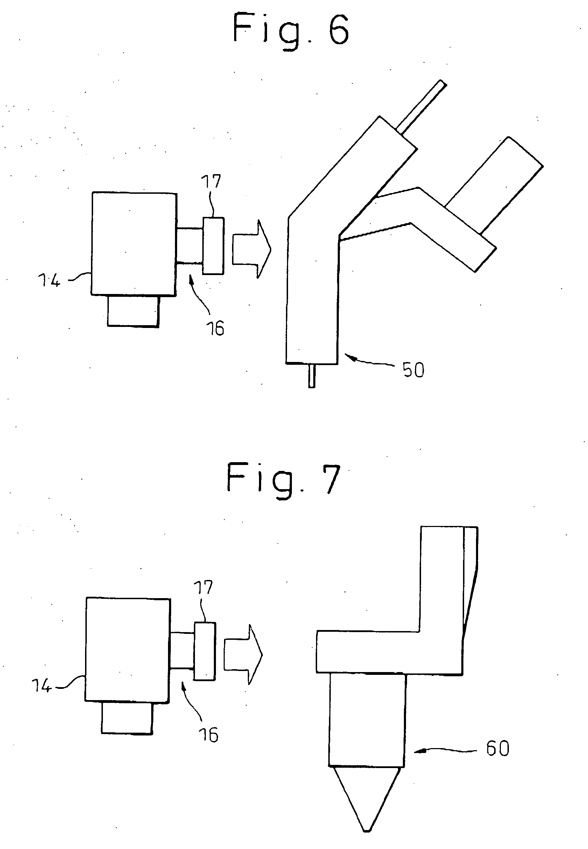

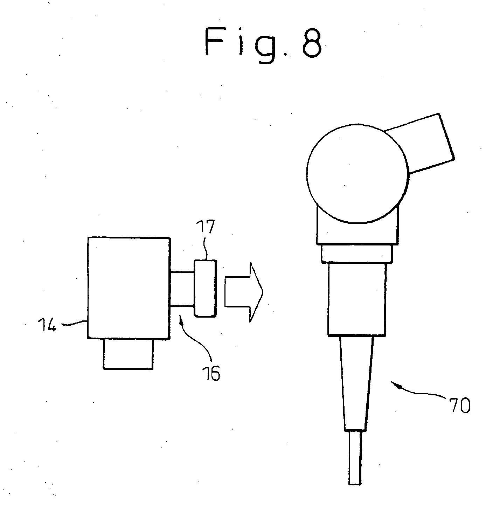

Further, while the working tool mounted to the robot is a spot welding gun in the above embodiment, the present invention is, of course, applicable to other working tools in the same manner. Figs. 6 to 8 illustrate such examples wherein other tools are used. In Fig. 6, the tool is an arc welding torch 50; in Fig. 7, the tool is a laser beam machining nozzle 60; and in Fig. 8, the tool is a sealing gun 70. In either case, the imaging means 14 (including the light projector not shown) is attachable to the tool by using a detachable mechanism 16 (for example, a magnet 17) so that the optical axis is parallel to the working direction in accordance with a definition of the working direction described before.

Although the invention has been shown and described with exemplary embodiments thereof, it should be understood by those skilled in the art that the foregoing and various other changes, omissions and additions may be made therein and thereto without departing from the spirit and the scope of the invention.

**Claims**

1. A device for correcting positional data of a robot comprising

   a vision sensor including imaging means and image-processing means for processing an image obtained by the imaging means,
   positional data correcting means for correcting positional data of a motion of the robot in correspondence to the deviation from a reference position of a jig or a workpiece obtained by processing the image of a plurality of predetermined points, imaged while using the imaging means, by the image-processing means, and
   attachment means mounted to an robot arm, for detachably attaching the imaging means to a tool for delivering energy or working substance to a workpiece,

   wherein the attachment means attaches the imaging means to the tool so that an optical axis of the imaging means coincides with the working direction of the tool.

2. A device for correcting positional data of a robot as defined by claim 1, wherein the tool is a spot welding gun and the working direction is an opening/closing direction of the spot welding gun.

3. A device for correcting positional data of a robot as defined by claim 1, wherein the tool is an arc welding torch and the working direction is a longitudinal direction of the arc welding torch.

4. A device for correcting positional data of a robot as defined by claim 1, wherein the tool is a laser beam machining nozzle and the working direction is a longitudinal direction of the laser beam machining nozzle.

5. A device for correcting positional data of a robot as defined by claim 1, wherein the tool is a sealing gun and the working direction is a direction in which sealing agent is injected from the sealing gun.

6. A device for correcting positional data of a robot as defined by any one of claims 1 to 5, wherein the attachment means is capable of detachably attaching the imaging means to the tool by using magnet force.

7. A device for correcting positional data of a robot as defined by any one of claims 1 to 5, wherein the imaging means is attachable to and detachable from the tool by using mechanical fastening means.

8. A device for correcting positional data of a robot as defined by any one of claims 1 to 5, wherein the imaging means is attachable to and detachable from the tool by using pneumatic pressure fastening means.

9. A device for correcting positional data of a robot as defined by any one of claims 1 to 8, wherein the vision sensor is a three-dimensional vision sensor.

10. A device for correcting positional data of a robot as defined by any one of claims 1 to 8, wherein the vision sensor is a two-dimensional vision sensor.

11. A device for correcting positional data of a robot as defined by any one of claims 1 to 10, wherein the image at the plurality of the predetermined points by the imaging means is carried out by positioning the imaging means at the image position for imaging the plurality of the predetermined points by the operation of the robot based on an image-position moving program taught to the robot.

Fig.1

# Fig. 2

# Fig. 3

# Fig. 4

```
        ( START )
            │
┌───────────────────────────┐
│ MOVE TO IMAGE POSITION D1  │──S1
└───────────────────────────┘
            │
┌───────────────────────────┐
│ PROJECT LIGHT/CARRY OUT    │
│ IMAGING AND OBTAIN IMAGE   │──S2
└───────────────────────────┘
            │
┌───────────────────────────┐
│ DETECT POSITION OF POINT P1│──S3
└───────────────────────────┘
            │
┌───────────────────────────┐
│ MOVE TO IMAGE POSITION D2  │──S4
└───────────────────────────┘
            │
┌───────────────────────────┐
│ PROJECT LIGHT/CARRY OUT    │
│ IMAGING AND OBTAIN IMAGE   │──S5
└───────────────────────────┘
            │
┌───────────────────────────┐
│ DETECT POSITION OF POINT P2│──S6
└───────────────────────────┘
            │
┌───────────────────────────┐
│ MOVE TO IMAGE POSITION D3  │──S7
└───────────────────────────┘
            │
┌───────────────────────────┐
│ PROJECT LIGHT/CARRY OUT    │
│ IMAGING AND OBTAIN IMAGE   │──S8
└───────────────────────────┘
            │
┌───────────────────────────┐
│ DETECT POSITION OF POINT P3│──S9
└───────────────────────────┘
            │
┌───────────────────────────┐
│ OBTAIN <xnw>, <ynw> AND <znw>│──S10
└───────────────────────────┘
            │
┌───────────────────────────┐
│ OBTAIN [A] BY EQUATION (1) │──S11
└───────────────────────────┘
            │
┌───────────────────────────┐
│ CORRECT RESPECTIVE POSITIONAL DATA │──S12
└───────────────────────────┘
            │
         ( END )
```

Fig.5

# Fig. 6

# Fig. 7

# Fig. 8